# EUROPEAN PATENT SPECIFICATION

(11) **EP 3 409 569 B1**
(45) Date of publication and mention of the grant of the patent: **11.11.2020**
(21) Application number: 18151185.8
(22) Date of filing: 11.01.2018
(51) Int. Cl.: B62H 3/04, B62H 5/14

(54) **BIKE LOCK**
FAHRRADSCHLOSS
VERROU DE BICYCLETTE

(30) Priority: 12.01.2017 GB 201700550
(43) Date of publication of application: 05.12.2018
(73) Proprietor: Bison Security Products (Wales) Limited, Caer Wern Merthyr Tydfil CF48 1AD (GB)
(72) Inventor: Davies, Gareth, Penderyn CF44 0YJ (GB)
(74) Representative: Baker, Thomas Edward

(56) References cited:
- DE-C- 92 733
- DE-U1- 8 801 618
- GR-B- 1 006 064
- JP-A- 2009 083 738
- US-A- 4 437 597
- US-A1- 2003 071 097
- US-A1- 2006 108 297
- US-B1- 9 102 273
- Anonymous: "Motorcycle Front Wheel Tire Shoe Stand With Self Locking Clamp", , 25 October 2018 (2018-10-25), XP055519177, Retrieved from the Internet: URL:https://www.wmastore.com/DIRT-BIKE-MOT ORCYCLE-MX-TRAILER-WHEEL-CHOCK-TIRE-BIKE-S TAND-AMDBIKEC.htm [retrieved on 2018-10-25]

## Description

The present invention relates to a bike lock and in particular an apparatus suitable for temporarily preventing movement of a bike, motorcycle, moped or scooter.

Bikes, which includes all types of bicycles and motorcycles, are commonly used for both recreational and work purposes. However, there is a significant problem with bike thefts, as bikes are often parked or stowed on the street, in car parks, farms, or other accessible areas.

With regards to motorised bikes, an unauthorised operator can climb aboard and as such the controls and the workings of the vehicle are accessible without requiring any key or security disabling requirements. A key is only required to permit operation of the bike. For this reason and due to their size, such bikes may be simply lifted and removed from their location, or due to the accessibility the engine security measures such as a key ignition may be bypassed and the bike may be taken without consent.

Typically, when a bike is not in use it is secured with a chain or other security device, such as a D-lock, which may pass through one or more components of the bike and which may prevent rotation of one or more wheels. These known security devices can usually be broken using tools, for example bolt cutters. These known security devices may also not prevent the bike from being lifted and removed.

Numerous systems have been proposed in order to reduce the chance of theft of vehicles, such as the provision of a tracker device on the bike frame or chassis, however a problem with such an arrangement is that although the bike can be tracked, by the time the chassis or frame is found the remaining components may have been stripped from the bike.

Alternative security measures involve storing the bike in a secure compound such as a metal shed. However, the provision of such a shed is expensive, often inconvenient and does not guarantee that the shed or lock-up cannot be broken into. Accordingly, there still remains a significant problem with stealing of bikes.

DE8801618U discloses the preamble of claim 1.

The present invention aims to overcome this problem by providing a secure locking arrangement which will prevent unwanted taking of a bike whilst providing a simple and quick operation to move from the locked to the unlocked configuration.

According to a first aspect of the present invention there is an apparatus for securing a bike, as defined in appended claim 1.

The apparatus may be configured to secure the front or the back wheel of a bike. The bike may be any kind of two wheeled vehicle, including push-bikes or pedal-bikes (such as mountain bikes, road bikes, BMX bikes etc.), motorcycles, motocross bikes, scooters or mopeds.

An advantage of this apparatus is that it prevents the bike from being lifted and removed as the base is attached to a secure surface (i.e. to a surface that cannot be easily moved). For example, the secure surface may be the ground, or the floor of a building.

In addition, the movement of the second structure between the open and closed positions allows a bike to be quickly and conveniently secured without requiring the user to attach any chains or other devices to the bike.

Conveniently, the second structure member may be moved from the open to the closed position and the locking arrangement may be locked without requiring the user to contact the bike or the bike wheel. This is particularly beneficial when the bike or bike wheel is wet or soiled (e.g. covered in mud or dust etc.), as the user will not get dirty while locking up their bike.

The first structure and/or the second structure may each comprise a single component, or more than one component.

The first structure may comprise two opposing side portions attached to the base, wherein the side portions define a gap there between for receiving a bike wheel.

For example, the first structure may comprise at least two elongate members attached to the base, wherein the elongate members are positioned to receive a bike wheel there between. Preferably, the first structure is arranged to support the bike wheel in an upright position.

Optionally, the first structure may comprise a stand or frame configured to support a bike wheel.

In some embodiments, the second structure may comprise a bar, post or other elongate member which, in the closed position, prevents the bike wheel from being removed from the first structure.

Optionally, the base may comprise a plurality of apertures, each aperture sized to receive a fastener for attaching the base to the secure surface. Preferably, at least one aperture is positioned such that it is disposed beneath the bike wheel when the wheel is secured in the apparatus. This is advantageous as it prevents the fastener received in the at least one aperture from being removed when the apparatus is in use. As such, the base cannot be easily detached from the secure surface to allow the apparatus and the bike retained therein to be lifted and removed.

For example, at least one fastener which secures the base to a surface may be accessible through a window in the first structure. In use, the bike wheel may block the window in the first structure such that the fastener cannot be removed.

In some embodiments, the fastener to be received in the plurality of apertures may be provided with the apparatus. The fasteners may be bolts.

The second structure may be connected to the first structure and/or to the base. The second structure may be configured to slide, rotate, pivot or extend from the open position to the closed position.

In some embodiments, the second structure may be manually moveable between the open and closed positions. For example, the second structure may comprise a handle which a user can hold to move the second structure.

Additionally or alternatively, an actuator may be configured to move the second structure between the open and closed positions. Optionally, the actuator may automatically move the second structure when a bike wheel is received in the first structure.

Optionally, the second structure may be pivotable relative to the first structure. In some embodiments the second structure may be mounted on the first structure by a hinge pin.

Optionally, the first structure may substantially surround or encapsulate at least a portion of the bike wheel. The first structure may comprise a central plate and two side plates. The side plates may extend approximately perpendicularly to the central plate.

In some embodiments, the first structure may be arcuate.

Optionally, the second structure may substantially surround or encapsulate at least a portion of the bike wheel, at least when in the closed position. The second structure may comprise a central plate and two side plates. The side plates may extend approximately perpendicularly to the central plate.

In some embodiments, the second structure may be arcuate.

In the open position the second structure may at least partially overlap or surround the first structure. In the closed position the second structure may be spaced from the first structure.

Optionally, the second structure may be pivoted around the circumference of the bike wheel when moving towards the closed position, such that it prevents the bike wheel from being moved out of engagement with the first structure.

In some embodiments, in the closed position the first and second structures may surround or encapsulate more than half the circumference of the bike wheel in total.

Preferably, the arrangement of the first and second structures is such that, in the closed position, even if the tyre of the bike wheel is punctured or deflated the wheel remains retained in the apparatus. This prevents the bike wheel from being let down in order to steal the bike.

The apparatus covers the opposing ends of the wheel axle or the central portion of the bike wheel where the wheel is bolted the bike frame (i.e. the wheel bolt). This prevents a potential thief from removing the wheel secured in the apparatus from the bike frame in order to steal the rest of the bike, leaving only the detached wheel secured in the apparatus.

According to the invention, the apparatus comprises a pair of opposing central hubs which are positioned to cover or shield each end of the wheel bolt. The central hubs are connected to the first and/or second structures and/or the base by one or more support arms.

In some embodiments the apparatus may be made of metal, such as steel. This advantageously makes it difficult to cut or break the apparatus using tools.

Optionally, the base may comprise a mechanical stop which restricts movement of the bike wheel in a given direction. In some embodiments the base may comprise a ramp.

Preferably, when the locking arrangement is locked it does not extend externally to the apparatus. For example, preferably the locking arrangement does not comprise an arm, bolt, or securing arrangement which is accessible outside of the apparatus when a bike wheel is secured in the apparatus. This reduces the risk of the locking arrangement being broken using tools, for example bolt cutters.

The locking arrangement may comprise a bolt or pin which is movable between a locked position and an unlocked position, wherein in the locked position the bolt or pin prevents the second structure moving from the closed position to the open position.

Optionally, the locking arrangement may require an authorised key or pin code to move the locking arrangement between the locked and unlocked positions. Preferably, the locking means may comprise a bullet lock (also known as a roller shutter door lock). A bullet lock is commonly used to lock shutter doors and comprises a thick pin which, when the correct key is turned in the lock opening, is extended from the rear of the lock.

In other embodiments, the locking arrangement may comprise a pin-tumbler or Yale ® lock.

According to the invention, the locking arrangement is disposed in one of the central hubs of the apparatus. For example, the central hub may comprise an aperture sized to house the bullet lock. When the bullet lock is locked the pin may project adjacent to the pivot point of the second strucutre, thereby locking the second structure in the closed position.

Preferably, the apparatus may comprise two or more locking arrangements. The two or more locking arrangements may include different types of locks.

For example, a bullet lock may be housed in each of the central hubs of the apparatus. Preferably, the same key fits each locking arrangement, as this is more convenient for the user.

Illustrative embodiments of the invention will now be described with reference to the accompanying drawings, in which:
Figure 1 shows a front perspective view of the apparatus of the present invention in an open position;
Figure 2 shows a side perspective view of the apparatus in Figure 1;
Figure 3 shows a side perspective view of the apparatus in a closed position, without a bike;
Figure 4 shows a back view of the apparatus in Figure 3;
Figure 5 shows a side view of the apparatus in Figure 1 with a rear bike wheel received in the first arcuate member; and
Figure 6 shows the apparatus of Figure 5 with the second arcuate member in a closed position.

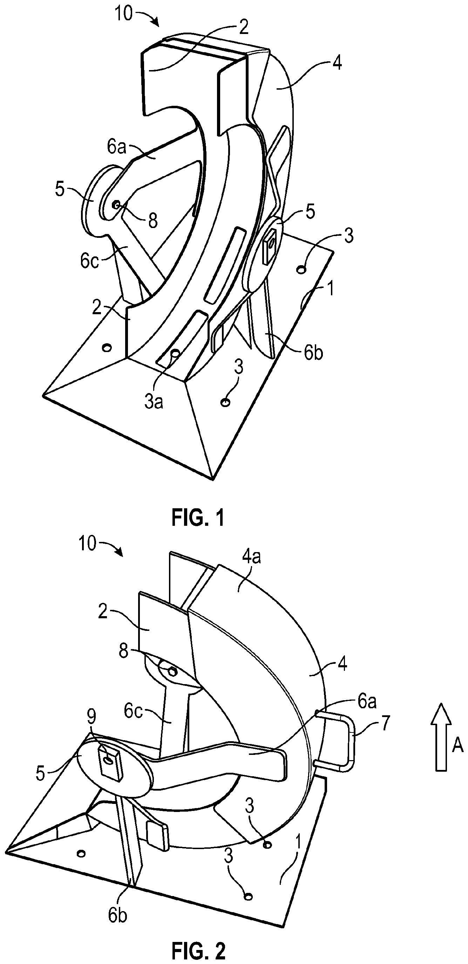

Figure 1 shows an apparatus 10 according to an embodiment of the invention. The apparatus 10 comprises a base 1 having a plurality of apertures 3 extending there through. Each aperture 3 is a bolt hole sized to receive a bolt which allows the base 1 to be attached to a secure surface, such as the ground.

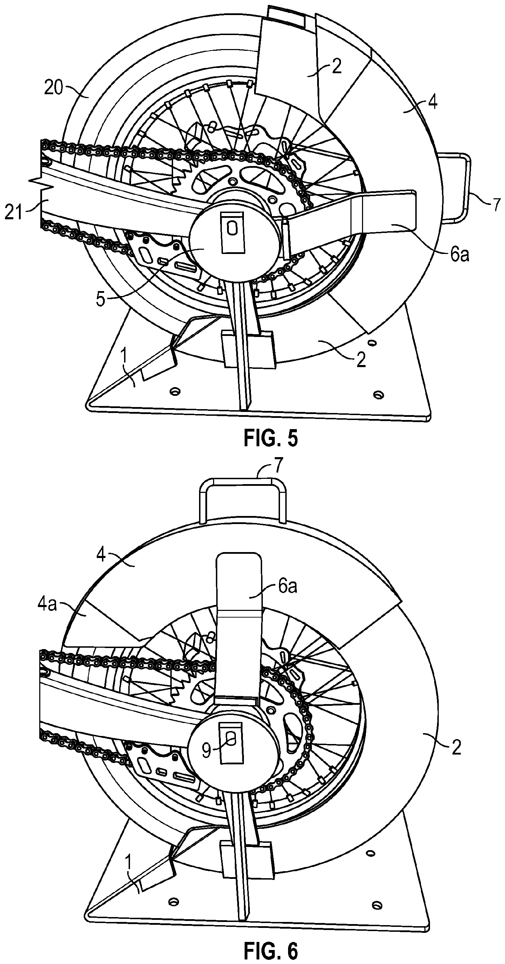

A first structure 2 is attached to the base 1. The first structure 2 is substantially C-shaped and comprises a central plate and two side plates, wherein the side plates extend perpendicularly to the central plate. Thus, the first structure 2 is shaped to surround or encapsulate at least a portion of a bike wheel (not shown, see Figure 5). Thus, the first structure 2 is substantially arcuate.

An aperture 3a in the base 1 is positioned underneath an aperture or window in the central portion of the first structure 2. Thus, the aperture 3a cannot be accessed when a bike wheel is received in the first structure 2, which prevents a potential thief removing the base 1 from the secure surface so as to steal the bike.

A second structure 4 is provided which is also substantially C-shaped, but is slightly wider than the first structure 2. The second structure 4 is attached (in this example welded) to a plurality of support arms 6 disposed on either side of the second structure 4.

The side plates of the first and second structures 2, 4 are of sufficient length that in use they extend past the tyre of the bike wheel. This ensures that the bike wheel is retained in the apparatus even if the tyre is punctured or deflated.

There are two upper support arms 6a, each of which attach the second structure 4 to a respective central hub 5. The central hubs 5 are on opposing sides of the apparatus 10 and are positioned such that they cover the wheel bolt when a bike wheel is received in the apparatus.

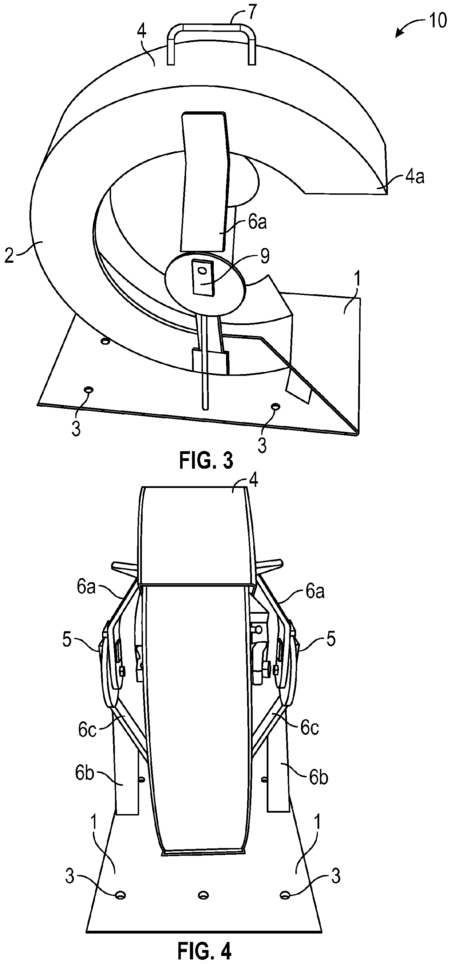

A second pair of support arms 6b attach the central hubs 5 to the base 1 and a third pair of support arms 6c attach the central hubs 5 to the first structure 2. Each of the support arms 6 is clearly shown in Figure 4.

The two upper support arms 6a are pivotably connected to the central support hubs 5 at pivot points 8. This allows the second structure 4 and the upper support arms 6a to pivot or rotate relative to the first structure 2, as the first structure 2 is fixed in position.

In Figure 1 the second structure 4 is shown in an open position. In the open position the second structure 4 is positioned on top of the first structure 2, such that it overlaps or surrounds a portion of the first structure 2. In this position a bike wheel can be received in the first structure 2.

As shown in Figure 2, a handle 7 is provided on the outer surface of the second structure 4. To secure a bike wheel in the apparatus a user may conveniently grasp the handle 7 and pull the second structure 4 in the direction shown by arrow A in Figure 2. This pivots the second structure 4 around the circumference of the bike wheel away from the first structure 2, towards the closed position as shown in Figure 3.

In the closed position, as shown in Figure 3, the second structure 4 now substantially does not overlap with the first structure 2. The upper support arms 6a extend substantially perpendicularly to the base 1. Importantly, in the closed position, the first and second structures 2, 4 surround more than half of the circumference of the bike wheel (when in use). Thus, the front portion 4a of the second structure 4 prevents a bike wheel received in the first structure 2 from being wheeled out of the apparatus.

The portion 4a of the second structure 4 is reinforced to make this portion stronger and harder for a potential thief to cut through.

In other embodiments, the first and second structures 2, 4 may not form a complete C-shape when in the closed position, as long as at least a portion of the second structures 4 blocks the wheel from being removed from the first structure 2. For example, there can be a gap between the first and second structures 2, 4 in the closed position.

A locking arrangement can be disposed in the aperture 9 in the central hub 5 on one, or both sides of the apparatus (see Figure 2). The locking arrangement is not shown in the figures, but this is preferably a bullet lock. To prevent the second structure 4 from being pivoted back to the open position in order to release the bike wheel, an authorised key can be inserted into the bullet lock disposed in aperture 9 and turned, which locks the support arms 6a in the closed position.

Figures 5 and 6 demonstrate the apparatus 10 in use with a motocross bike wheel 20. In Figure 5 the apparatus is in the open position, such that the rear wheel 20 of the bike can be received in the first structure 2. As shown, the central hubs 5 cover the bolt which secures the wheel 20 to the bike frame 20.

When the bike is in position, as shown in Figure 5, the user can pull the handle 7 attached to the second structure 4 and move the second structure to the closed position, as shown in Figure 6. Before leaving the bike unattended, the user must lock the apparatus in the closed position using the locking arrangement disposed in aperture 9 in one, or both sides of the apparatus.

It will be appreciated that the apparatus 10 could be used with any other type of bike wheel, provided that the first and second structures 2, 4 are sized accordingly. In some embodiments, the diameter or height of the first and second structures 2, 4 may be adjustable, such that the same apparatus may be used with different size bike wheels.

In some embodiments, a different type of locking arrangement may be provided, which may or may not require a key.

In some embodiments, the first and/or second structures 2, 4, may be attached to opposing side members which completely encase the bike wheel, rather than leaving a portion of the wheel uncovered as in Figures 5 and 6.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of' and "comprising" means "including or consisting of'. The singular reference of an element does not exclude the plural reference of such elements and vice-versa. The mere fact that certain measures are recited in mutually different dependent claims does not indicate that a combination of these measures cannot be used to advantage.

## Claims

1. An apparatus (10) for securing a bike, the apparatus comprising:
a base (1) configured to be attached to a secure surface;
a first structure (2) attached to the base (1), wherein the first structure (2) is arranged to receive at least a portion of a wheel of the bike;
a second structure (4), wherein the second structure (4) is moveable relative to the first structure (2) between an open position in which a bike wheel can be received in the first structure (2) and a closed position in which the second structure (4) retains the bike wheel within the first structure (2);
wherein a locking arrangement is provided to lock the second structure (4) in the closed position;
**characterised in that** the apparatus (10) comprises a pair of opposing central hubs (5) which are positioned to each cover or shield a respective end of the bolt which attaches the bike wheel to the bike frame, wherein the central hubs (5) are connected to the first and/or second structures (2, 4) and/or to the base (1) by one or more support arms (6a, 6b, 6c); and
the locking arrangement is disposed in one of the central hubs (5).

2. An apparatus according to claim 1, wherein the base (1) comprises a plurality of apertures (3), each aperture (3) sized to receive a fastener for attaching the base (1) to the secure surface.

3. An apparatus according to claim 1, wherein at least one aperture (3a) is positioned such that it is disposed beneath the bike wheel when the wheel is secured in the apparatus.

4. An apparatus according to any of claims 1 to 3, comprising a handle (7) connected to the second structure (4) which a user can hold to move the second structure (4) between the open and closed positions.

5. An apparatus according to any preceding claim, wherein the first structure (2) and/or the second structure (4) is/are configured to encapsulate at least a portion of the bike wheel.

6. An apparatus according to any preceding claim, wherein the first structure (2) comprises two opposing side portions attached to the base, wherein the side portions define a gap there between for receiving a bike wheel.

7. An apparatus according to claim 5 or claim 6, wherein the first structure (2) comprises a central plate and two side plates, wherein the side plates extend substantially perpendicularly to the central plate.

8. An apparatus according to any of claims 5 to 7, wherein the second structure (4) comprises a central plate and two side plates, wherein the side plates extend substantially perpendicularly to the central plate.

9. An apparatus according to any of claims 5 to 8, wherein in the closed position the first and second structures (2, 4) encapsulate more than half the circumference of the bike wheel in total.

10. An apparatus according to any preceding claim, wherein the second structure (4) is pivotable relative to the first structure (2).

11. An apparatus according to claim 10, wherein in the open position the second structure (4) at least partially overlaps the first structure (2), and wherein the second structure (4) is pivotable around the circumference of the bike wheel such that in the closed position the second structure (4) prevents the bike wheel from being removed from the first structure (2).

12. An apparatus according to claim 7 or claim 8, wherein the side plates of the first and/or second structures (2, 4) are of sufficient length that in use they extend past the tyre of the bike wheel.

13. An apparatus according to any preceding claim, wherein the locking arrangement requires an authorised key or pin code to move the locking arrangement between a locked and an unlocked position; and/or
wherein the locking arrangement is a bullet lock.

14. An apparatus according to any preceding claim, wherein the apparatus comprises a plurality of locking arrangements, each locking arrangement configured to lock the second structure (4) in the closed position.

15. An apparatus according to claim 14, wherein a locking arrangement is disposed in each of the central hubs (5).

## Patentansprüche

1. Vorrichtung (10) zum Sichern eines Fahrrads, wobei die Vorrichtung umfasst:
eine Basis (1), die dazu ausgelegt ist, an einer sicheren Oberfläche befestigt zu werden;
eine erste Struktur (2), die an der Basis (1) befestigt ist, wobei die erste Struktur (2) angeordnet ist, um mindestens einen Teil eines Rads des Fahrrads aufzunehmen;
eine zweite Struktur (4), wobei die zweite Struktur (4) relativ zu der ersten Struktur (2) zwischen einer offenen Position, in der ein Rad eines Fahrradrads in der ersten Struktur (2) aufgenommen werden kann, und einer geschlossenen Position, in der die zweite Struktur (4) das Rad des Fahrradrads innerhalb der ersten Struktur (2) festhält, beweglich ist;
wobei eine Verriegelungsanordnung vorgesehen ist, um die zweite Struktur (4) in der geschlossenen Position zu verriegeln;
**dadurch gekennzeichnet, dass** die Vorrichtung (10) ein Paar einander gegenüberliegender zentraler Naben (5) umfasst, die so positioniert sind, dass jedes ein jeweiliges Ende des Bolzens, der das Rad des Fahrradrad am Fahrradrahmen befestigt, abdeckt oder abschirmt, wobei die zentralen Naben (5) durch einen oder mehrere Stützarme (6a, 6b, 6c) mit der ersten und/oder zweiten Struktur (2, 4) und/oder mit der Basis (1) verbunden sind; und
die Verriegelungsanordnung in einer der zentralen Naben (5) angeordnet ist.

2. Vorrichtung nach Anspruch 1, wobei die Basis (1) mehrere Öffnungen (3) umfasst, wobei jede Öffnung (3) so bemessen ist, dass sie ein Befestigungsmittel zum Befestigen der Basis (1) an der sicheren Oberfläche aufnimmt.

3. Vorrichtung nach Anspruch 1, wobei mindestens eine Öffnung (3a) so angeordnet ist, dass sie unterhalb des Rads des Fahrrads angeordnet ist, wenn das Rad in der Vorrichtung gesichert ist.

4. Vorrichtung nach einem der Ansprüche 1 bis 3, umfassend einen mit der zweiten Struktur (4) verbundenen Griff (7), den ein Benutzer halten kann, um die zweite Struktur (4) zwischen der offenen und der geschlossenen Position zu bewegen.

5. Vorrichtung nach einem der vorhergehenden Ansprüche, wobei die erste Struktur (2) und/oder die zweite Struktur (4) dazu ausgelegt ist/sind, mindestens einen Teil des Rads des Fahrradrads zu umschließen.

6. Vorrichtung nach einem der vorhergehenden Ansprüche, wobei die erste Struktur (2) zwei gegenüberliegende Seitenteile umfasst, die an der Basis befestigt sind, wobei die Seitenteile zwischen sich einen Spalt zur Aufnahme eines Rads des Fahrradrads definieren.

7. Vorrichtung nach Anspruch 5 oder 6, wobei die erste Struktur (2) eine zentrale Platte und zwei Seitenplatten umfasst, wobei sich die Seitenplatten im Wesentlichen senkrecht zu der zentralen Platte erstrecken.

8. Vorrichtung nach einem der Ansprüche 5 bis 7, wobei die zweite Struktur (4) eine zentrale Platte und zwei Seitenplatten umfasst, wobei sich die Seitenplatten im Wesentlichen senkrecht zu der zentralen Platte erstrecken.

9. Vorrichtung nach einem der Ansprüche 5 bis 8, wobei in der geschlossenen Position die erste und zweite Struktur (2, 4) mehr als die Hälfte des Gesamtumfangs des Rads des Fahrradrads umschließen.

10. Vorrichtung nach einem der vorhergehenden Ansprüche, wobei die zweite Struktur (4) relativ zu der ersten Struktur (2) schwenkbar ist.

11. Vorrichtung nach Anspruch 10, wobei in der offenen Position die zweite Struktur (4) die erste Struktur (2) zumindest teilweise überlappt, und wobei die zweite Struktur (4) um den Umfang des Rads des Fahrradrads schwenkbar ist, so dass in der geschlossenen Position die zweite Struktur (4) verhindert, dass das Rad des Fahrradrads von der ersten Struktur (2) entfernt werden kann.

12. Vorrichtung nach Anspruch 7 oder 8, wobei die Seitenplatten der ersten und/oder zweiten Struktur (2, 4) von ausreichender Länge sind, dass sie sich im Gebrauch über den Reifen des Rads des Fahrrads hinaus erstrecken.

13. Vorrichtung nach einem der vorhergehenden Ansprüche, wobei die Verriegelungsanordnung einen autorisierten Schlüssel oder Pincode erfordert, um die Verriegelungsanordnung zwischen einer verriegelten und einer nicht verriegelten Position zu bewegen; und/oder wobei die Verriegelungsanordnung ein Bullet-Schloss ist.

14. Vorrichtung nach einem der vorhergehenden Ansprüche, wobei die Vorrichtung mehrere Verriegelungsanordnungen umfasst, wobei jede Verriegelungsanordnung dazu ausgelegt ist, die zweite Struktur (4) in der geschlossenen Position zu verriegeln.

15. Vorrichtung nach Anspruch 14, wobei in jeder der zentralen Naben (5) eine Verriegelungsanordnung angeordnet ist.

## Revendications

1. Appareil (10) destiné à immobiliser une bicyclette, l'appareil comportant :
une base (1) configurée pour être fixée à une surface immobile ;
une première structure (2) fixée à la base (1), la première structure (2) étant agencée pour recevoir au moins une partie d'une roue de la bicyclette ;
une seconde structure (4), la seconde structure (4) étant mobile par rapport à la première structure (2) entre une position ouverte dans laquelle une roue de bicyclette peut être reçue dans la première structure (2) et une position fermée dans laquelle la seconde structure (4) retient la roue de bicyclette à l'intérieur de la première structure (2) ;
un agencement de verrouillage étant prévu pour verrouiller la seconde structure (4) dans la position fermée ;
**caractérisé en ce que** l'appareil (10) comporte une paire de moyeux centraux (5) opposés qui sont positionnés pour recouvrir ou protéger chacun une extrémité respective du boulon qui fixe la roue de bicyclette au cadre de bicyclette, les moyeux centraux (5) étant liés aux première et/ou seconde structures (2, 4) et/ou à la base (1) par un ou plusieurs bras (6a, 6b, 6c) de soutien ; et
l'agencement de verrouillage étant disposé dans un des moyeux centraux (5).

2. Appareil selon la revendication 1, la base (1) comportant une pluralité d'ouvertures (3), chaque ouverture (3) étant dimensionnée pour recevoir un élément d'assemblage servant à fixer la base (1) à la surface immobile.

3. Appareil selon la revendication 1, au moins une ouverture (3a) étant positionnée de telle façon qu'elle est disposée sous la roue de bicyclette lorsque la roue est immobilisée dans l'appareil.

4. Appareil selon l'une quelconque des revendications 1 à 3, comportant une poignée (7) liée à la seconde structure (4), qu'un utilisateur peut tenir pour déplacer la seconde structure (4) entre les positions ouverte et fermée.

5. Appareil selon l'une quelconque des revendications précédentes, la première structure (2) et/ou la seconde structure (4) étant configurées pour englober au moins une partie de la roue de bicyclette.

6. Appareil selon l'une quelconque des revendications précédentes, la première structure (2) comportant deux parties latérales opposées fixées à la base, les parties latérales définissant entre elles un écartement destiné à recevoir une roue de bicyclette.

7. Appareil selon la revendication 5 ou la revendication 6, la première structure (2) comportant une plaque centrale et deux plaques latérales, les plaques latérales s'étendant sensiblement perpendiculairement à la plaque centrale.

8. Appareil selon l'une quelconque des revendications 5 à 7, la seconde structure (4) comportant une plaque centrale et deux plaques latérales, les plaques latérales s'étendant sensiblement perpendiculairement à la plaque centrale.

9. Appareil selon l'une quelconque des revendications 5 à 8, les première et seconde structures (2, 4) englobant au total, dans la position fermée, plus de la moitié de la circonférence de la roue de bicyclette.

10. Appareil selon l'une quelconque des revendications précédentes, la seconde structure (4) pouvant pivoter par rapport à la première structure (2).

11. Appareil selon la revendication 10, la seconde structure (4) chevauchant au moins partiellement, dans la position ouverte, la première structure (2), et la seconde structure (4) pouvant pivoter autour de la circonférence de la roue de bicyclette de telle façon que, dans la position fermée, la seconde structure (4) empêche la roue de bicyclette d'être retirée de la première structure (2).

12. Appareil selon la revendication 7 ou la revendication 8, les plaques latérales des première et/ou seconde structures (2, 4) étant d'une longueur suffisante pour qu'en cours d'utilisation, elles s'étendent au-delà du pneu de la roue de bicyclette.

13. Appareil selon l'une quelconque des revendications précédentes, l'agencement de verrouillage nécessitant une clé ou un code PIN autorisés pour déplacer l'agencement de verrouillage entre des positions verrouillée et déverrouillée ; et/ou
l'agencement de verrouillage étant une serrure pour volet roulant.

14. Appareil selon l'une quelconque des revendications précédentes, l'appareil comportant une pluralité d'agencements de verrouillage, chaque agencement de verrouillage étant configuré pour verrouiller la seconde structure (4) dans la position fermée.

15. Appareil selon la revendication 14, un agencement de verrouillage étant disposé dans chacun des moyeux centraux (5).
